# EUROPEAN PATENT SPECIFICATION

(11) **EP 2 521 067 B1**
(45) Date of publication and mention of the grant of the patent: **20.07.2016**
(21) Application number: 11808552.1
(22) Date of filing: 24.03.2011
(51) Int. Cl.: H04B 1/54, H04B 1/59, H04B 5/02, G06K 7/10

(54) **RFID READER/WRITER, RFID SYSTEM AND COMMUNICATION METHOD**
RFID-LESE-/SCHREIBGERÄT, RFID-SYSTEM UND KOMMUNIKATIONSVERFAHREN
LECTEUR/GRAVEUR RFID, SYSTÈME RFID ET PROCÉDÉ DE COMMUNICATION

(30) Priority: 15.03.2011 JP 2011057112
(43) Date of publication of application: 07.11.2012
(73) Proprietor: Omron Corporation, Kyoto-shi, Kyoto 600-8530 (JP)
(72) Inventor: Yamasaki, Kazushi, Kyoto, 619-0283 (JP)
(74) Representative: Horn Kleimann Waitzhofer Patentanwälte PartG mbB
(86) International application number: PCT/JP2011/057157
(87) International publication number: WO 2012/124166

(56) References cited:
- WO-A2-2007/069140
- DE-A1-102007 034 009
- JP-A- 2000 306 053
- JP-A- 2007 504 537
- JP-A- 2008 125 077
- JP-A- 2010 035 038
- US-A1- 2010 194 536
- US-B1- 7 369 036

## Description

### TECHNICAL FIELD

The present invention relates to an RFID reader/writer, an RFID system, and a communication method, particularly to an RFID reader/writer, an RFID system, and a communication method, which hardly receives an influence of a noise.

### BACKGROUND ART

For example, Japanese Unexamined Patent Publication No. 2010-35038 (Patent Document 1) and Japanese Patent No. 3874007 (Patent Document 3) disclose a conventional RFID system including an RFID reader/writer and an RFID tag.

For example, Japanese Unexamined Patent Publication No. 2003-70056 (Patent Document 2) discloses a communication channel setting method for setting a communication channel used in communication between wireless base station devices.

In Patent Document 1, carrier sense is executed prior to communication with a tag, a received power intensity is measured in a plurality of frequency channels to check unused states of the frequency channels, and good communication environment is ensured by fixing the frequency channel used in the communication with the tag according to the measured result. The carrier sense is used to check whether an arbitrary frequency channel is used by another RFID system, and the carrier sense is also useful as means for checking a noise distribution of an arbitrary frequency channel.

For example, the carrier sense is executed to check the low-noise frequency channel prior to the communication with the tag, and the frequency channel used and a frequency and a communication rate of a subcarrier are controlled such that the communication with the tag can be performed through the frequency channel, which allows the good communication environment to be ensured. The carrier sense is executed while the reader/writer is in a reception state, namely, the reader/writer does not emit a radio wave.

Patent Document 2 describes a communication channel setting method for setting the communication channel used in the communication between the wireless base station devices. In Patent Document 2, a noise level in a transmission band that may be used in the communication with another wireless base station device and a noise level in a reception band that may be used in the communication from another wireless base station device are measured, and a transmission channel in the transmission band in which the measured noise level is smaller than a predetermined threshold and a reception channel in the reception band in which the measured noise level is smaller than a predetermined threshold are selected.

In Patent Document 2, control such that a transmission rate of data to be transmitted is variable according to a bandwidth of the usable channel is not performed, but the bandwidth of the usable channel is controlled according to the transmission rate of the data to be transmitted.

The RFID system of Patent Document 3 includes waiting processing means for setting a communication waiting state in which only a carrier wave prior to the communication with the tag, and noise level extracting means for extracting a level of a received signal obtained in the communication waiting state as a noise level. The obtained noise level is externally displayed or output, or the communication waiting state is ended on the condition that the state in which the noise level becomes equal to or lower than a predetermined value is continued for a certain period, and the communication with the tag is started.

WO 2007/069140 A2 discloses a method of communication between an RFID reader and a plurality of transponders via a radio channel. The method comprises the steps of measuring a noise level of the radio channel, selecting an error correction algorithm depending on the result of the noise level measurement, and setting both the RFID reader and the transponders to the selected error correction algorithm. Claim 1 is delimited against this document.

### SUMMARY OF THE INVENTION

### PROBLEMS TO BE SOLVED BY THE INVENTION

The conventional RFID system that maintains the good communication state is configured as described above. Conventionally, in the RFID system, a noise in the same frequency band is assumed as the noise. For example, a radio wave used in another RFID system or other wireless stations, a spurious component of the radio wave, a secondarily-emitted radio wave component (such as a local transmitter signal that leaks from a receiving circuit of a radio) are assumed.

However, the inventors have found through experiments that, to the RFID system, a low-frequency device such as an inverter device may become a noise source that interrupts the communication of the RFID system.

First, a communication principle of the RFID system will be described in order to describe a mechanism that the low-frequency device interrupts the communication of the RFID system.

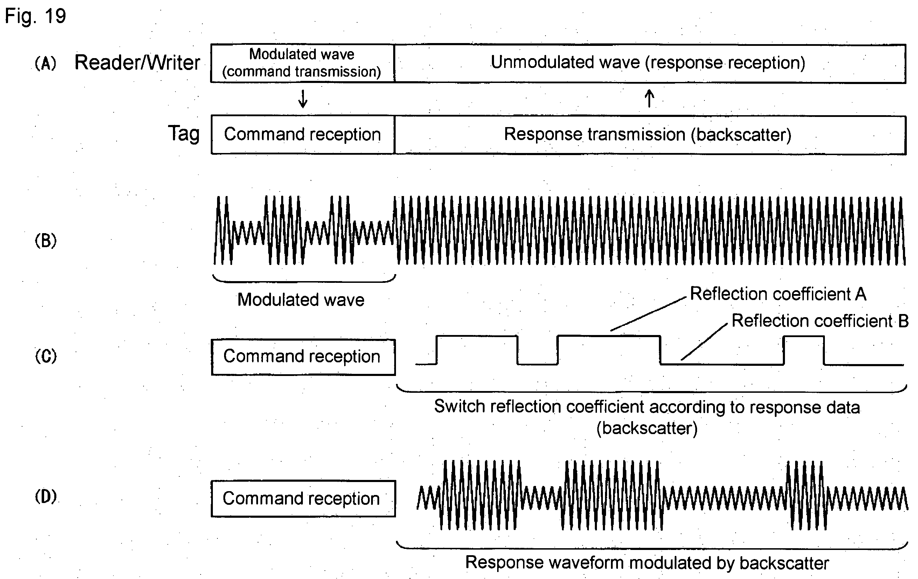

Figs. 19(A) to 19(D) are views illustrating a communication state between the RFID reader/writer (hereinafter, referred to as a "reader/writer" in short) and the RFID tag (hereinafter, referred to as a "tag" in short), Fig. 19(A) is a schematic diagram illustrating a communication content between the reader/writer and the tag, Fig. 19(B) is a schematic diagram illustrating a transmitted signal from the reader/writer to the tag, Fig. 19(C) is a schematic diagram illustrating an operation of the tag, and Fig. 19(D) is a view illustrating a transmitted signal from the tag to the reader/writer.

As illustrated in Fig. 19(A), in the communication between the reader/writer and the tag, the reader/writer transmits a command to the tag via a modulated wave (Fig. 19(B)). When the tag receives the command to transmit a response signal, the reader/writer transmits an unmodulated wave (carrier wave). The tag transmits the response signal by performing backscatter of the carrier wave (Figs. 19(C), and 19(D)). That is, at the time the response signal is transmitted from the tag side, the reader/writer continuously transmits the carrier wave as illustrated in Fig. 19(B).

The low-frequency device is operated at a low frequency. For example, the inverter device that is an example of the low-frequency device is usually operated at a switching frequency of tens of kHz to hundreds of kHz. The inventors have found a phenomenon in which, in the case that the radio wave of the carrier wave is incident to such an inverter device, the signal of the incident carrier wave is modulated and reflected according to a switching signal of the inverter device.

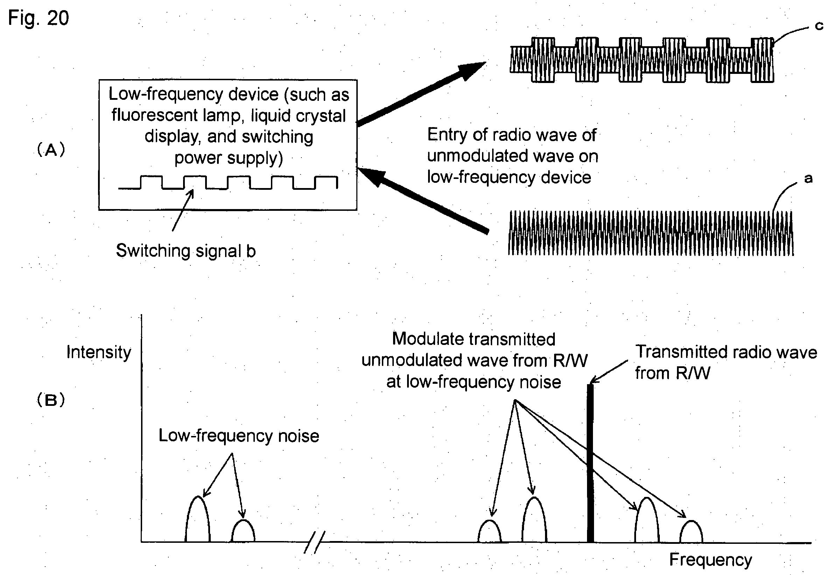

Figs. 20(A) and 20(B) illustrate the above phenomenon. Fig. 20(A) is a view illustrating a state in which the carrier wave is modulated according to a switching signal b to output a modulated wave c when the low-frequency device receives a radio wave a of the carrier wave, and Fig. 20(B) illustrates frequencies and intensities of the radio wave of the carrier wave transmitted from the reader/writer, a low-frequency device noise that is generated irrespective of the RFID system, and a modulated wave (hereinafter, referred to as a "modulated noise of low-frequency device") in which the radio wave of the carrier wave transmitted from the reader/writer is modulated and generated by the low-frequency device noise.

In the inverter device, a switching element is controlled by a switching signal to change an impedance of a circuit. When the impedance of the circuit is changed, a reflection coefficient is changed with respect to the incident radio wave of the carrier wave from a circuit pattern. After a reflected wave is changed according to the reflection coefficient, the reflected wave is emitted from the circuit pattern again, which generates the phenomenon.

The reflected wave that is emitted by the low-frequency device again is received by an antenna of the reader/writer and demodulated by the reader/writer, which becomes a noise component. Because the response signal from the tag is interrupted by the noise component, the noise component interrupts the communication of the RFID system.

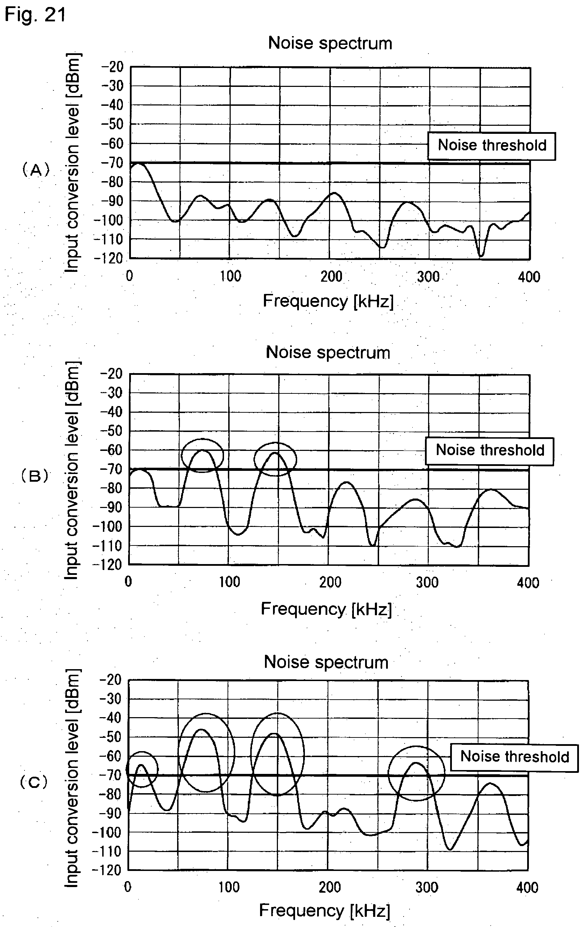

Figs. 21 (A) to 21 (C) illustrate investigation results of the phenomenon in the experiment. Figs. 21(A) to 21(C) are analysis diagrams in which a received frequency spectrum of the reader/writer is analyzed while an antenna unit of the reader/writer faces a fluorescent lamp that is used as the low-frequency device. Fig. 21(A) illustrates the case that the fluorescent lamp does not exist, Fig. 21 (B) illustrates the case that the antenna unit is 2 m away from the fluorescent lamp, and Fig. 21 (C) illustrates the case that the antenna unit is 1 m away from the fluorescent lamp.

As can be seen from Figs. 21 (A) to 21 (C), although the noise is not generated when the fluorescent lamp does not exist, the noise increases and the noise level becomes greater as the antenna unit is brought close to the lit fluorescent lamp.

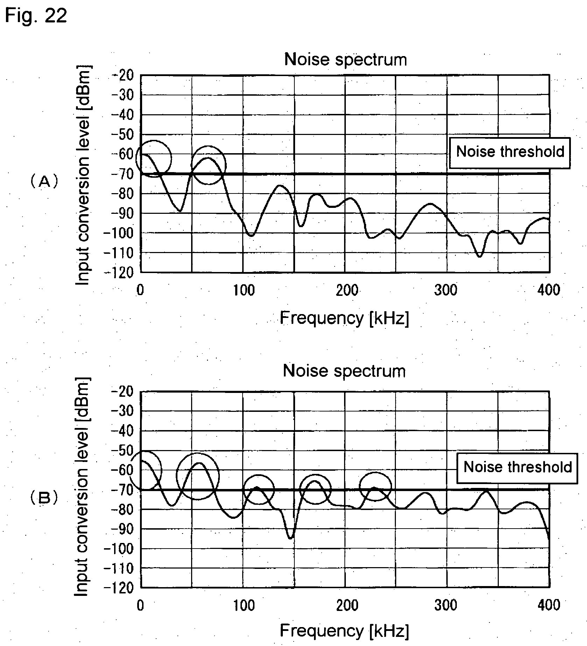

Another example will be described below. Figs. 22(A) and 22(B) are views corresponding to Figs. 21 (A) to 21 (C) when a liquid crystal screen of a PC is used as the low-frequency device. While the antenna unit of the reader/writer faces the liquid crystal screen, the received frequency spectrum of the reader/writer is analyzed in the case that the antenna unit is 2 m away from the liquid crystal screen (Fig. 22(A)) and the case that the antenna unit is 1 m away from the liquid crystal screen (Fig. 22(B)). In the case that the liquid crystal screen does not exist, the same result as the case that the fluorescent lamp does not exist in Fig. 21 (A) is obtained.

In the case that the radio wave of the carrier wave is incident to the low-frequency device, because the incident radio wave of the carrier wave is modulated and reflected according to the switching signal of the low-frequency device, the modulated radio wave is demodulated by the receiver of the reader/writer, and an S/N ratio is insufficiently ensured with respect to the original received signal of the tag, which results in a problem in that communication quality is degraded. The problem becomes pronounced with decreasing distance with the low-frequency device that is the noise source.

The techniques disclosed in Patent Documents 1 to 3 cannot deal with the phenomenon. In Patent Document 1, the noise in the frequency band of the communication with the tag is assumed as the noise. Pursuant to the Radio Law in Japan, for example, because the radio wave in a 953-MHz band is used in a UHF-band RFID system (as of January, 2011), the 953 MHz-band noise becomes a target of the carrier sense. Because the radio wave of the carrier wave is not emitted in the carrier sense, the modulated noise of the low-frequency device cannot be measured, and the problem cannot be solved.

In Patent Document 2, the noise level in the transmission band that may be used in the communication with another wireless base station device and the noise level in the reception band that may be used in the communication from another wireless base station device are measured, and the transmission channel in the transmission band in which the measured noise level is smaller than the predetermined threshold and the reception channel in the reception band in which the measured noise level is smaller than the predetermined threshold are selected. However, similarly to Patent Document 1, because the radio wave of the carrier wave is not emitted in measuring the noise level, the modulated noise of the low-frequency device cannot be measured, and the problem cannot be solved.

In Patent Document 3, although the carrier wave is output in measuring the noise level, only the obtained result is displayed or the communication process waits until the noise level becomes equal to or lower than the predetermined value. Therefore, the problem cannot be solved.

The invention is devised to solve the above problems, and an object thereof is to provide an RFID reader/writer, an RFID system, and a communication method, which hardly receive an influence of the noise of the low-frequency device such as the inverter device.

### MEANS FOR SOLVING THE PROBLEMS

An RFID reader/writer according to an aspect of the invention includes: a transmitter that transmits a transmitted signal to an RFID tag; a receiver that receives a received signal from the RFID tag based on the transmitted signal; a detector that detects a noise of the received signal received by the receiver. The transmitter transmits an unmodulated carrier wave. The RFID reader/writer includes control means for controlling the transmitter and the detector such that the detector detects the noise included in the received signal, when the transmitter outputs the unmodulated carrier wave transmitted from the transmitter prior to the communication with the RFID tag.

The RFID reader/writer includes setting means for setting a condition of communication with the RFID tag based on a detection result of the detector, the setting means including noise analysis means for analyzing the noise included in the received signal, and the RFID reader/writer includes communication parameter setting means for setting a communication parameter as the communication condition according to an analysis result of the noise analysis means, wherein the communication parameter selects a frequency having a low noise.

Preferably, a frequency of the carrier wave output from the transmitter is a carrier wave frequency of the transmitted signal used in the communication with the RFID tag.

The receiver may include demodulation means for demodulating the received signal received from the RFID tag, and the demodulation means may demodulate the received signal as a double-sideband signal, and the detector may detect the noise by measuring the demodulated signal demodulated by the demodulation means. The demodulation means may demodulate the received signal as a single-sideband signal, and the detector may detect the noise by measuring the demodulated signal demodulated by the demodulation means.

The demodulation means may independently demodulate the noise having a frequency higher than that of the carrier wave output from the transmitter as an upper sideband (USB) signal, and demodulate the noise having a frequency lower than that of the carrier wave output from the transmitter as a lower sideband (LSB) signal, and the detector may measure the demodulated signal demodulated by the demodulation means.

Preferably, the detector includes frequency analysis means for analyzing the frequency of the noise possessed by the demodulated signal.

More preferably, the RFID reader/writer includes frequency calculation means for calculating a frequency band having the lowest noise based on an analysis result of the frequency analysis means.

The communication parameter setting means may be adapted to set a communication parameter with respect to the RFID tag according to a calculation result of the frequency calculation means.

The communication parameter may set whether a subcarrier is used as a signal sent back from the RFID tag, the communication parameter may set a frequency of a subcarrier of a signal sent back from the RFID tag based on an analysis result of the frequency analysis means, may set a frequency of a subcarrier of a signal sent back from the RFID tag, and the communication parameter may set a communication rate of a signal sent back from the RFID tag.

The frequency of the noise detected by the detector may be output to an external device.

A communication method according to another aspect of the invention is a communication method in which an RFID reader/writer perform communication with an RFID tag, the RFID reader/writer including a transmitter that transmits a transmitted signal to the RFID tag and a receiver that receives a received signal from the RFID tag based on the transmitted signal. The communication method includes the steps of: transmitting an unmodulated carrier wave from the transmitter; detecting a noise, which is included in the received signal when the transmitter outputs the unmodulated carrier wave transmitted from the transmitter prior to the communication with the RFID tag; and performing the communication with the RFID tag at a frequency having a low detected noise.

Preferably, the step of performing the communication with the RFID tag at the frequency having the low detected noise includes the step of setting a communication parameter that selects a frequency having a low noise.

An RFID system according to still another aspect of the invention includes: the RFID reader/writer, and the RFID tag that performs communication with the RFID reader/writer.

### EFFECTS OF THE INVENTION

In the invention, the detector detects the noise included in the received signal, when the detector outputs the carrier wave transmitted from the transmitter prior to the communication with the RFID tag. Therefore, the communication with the tag can be performed using the frequency having the low noise including the modulated noise of the low-frequency device.

As a result, the RFID reader/writer, the RFID system, and the communication method, which hardly receive an influence of the noise of the low-frequency device, can be provided.

### BRIEF DESCRIPTION OF THE DRAWINGS

Fig. 1 is a block diagram illustrating an entire configuration of a reader/writer according to first and second embodiments of the invention.
Fig. 2 is a block diagram illustrating a configuration of a controller in the reader/writer of Fig. 1.
Fig. 3 is a flowchart illustrating an operation of the controller of the reader/writer.
Fig. 4 is a block diagram illustrating a configuration of a demodulated signal processor of the first embodiment.
Figs. 5(A) and 5(B) are views illustrating a noise SSB receiving process.
Fig. 6 is a view illustrating a noise distribution analysis process method when the SSB receiving process is executed.
Fig. 7 is a view illustrating another noise distribution analysis process method when the SSB receiving process is executed.
Figs. 8(A) and 8(B) are views illustrating a setting example of a communication parameter when the SSB receiving process is executed.
Figs. 9(A) and 9(B) are views illustrating another setting example of the communication parameter when the SSB receiving process is executed.
Fig. 10 is a block diagram illustrating a configuration of a demodulated signal processor according to the second embodiment.
Fig. 11 is a flowchart illustrating an operation of the controller of a reader/writer of the second embodiment.
Figs. 12(A) and 12(B) are views illustrating a noise DSB receiving process.
Fig. 13 is a view illustrating a noise distribution analysis process method when the DSB receiving process is executed.
Figs. 14(A) and 14(B) are views illustrating a setting example of a communication parameter when the DSB receiving process is executed.
Figs. 15(A) and 15(B) are views illustrating another setting example of the communication parameter when the DSB receiving process is executed.
Figs. 16(A) to 16(C) show a block diagram illustrating another configuration of the demodulated signal processor of the second embodiment.
Fig. 17 is a block diagram illustrating a reader/writer according to a third embodiment.
Fig. 18 is a block diagram illustrating a configuration of a controller in the reader/writer of the third embodiment.
Figs. 19(A) to 19(D) are views illustrating a communication state between a reader/writer and a tag in a related art.
Figs. 20(A) and 20(B) are views illustrating a phenomenon in which a signal is modulated and reflected when a radio wave of a carrier wave is incident to an inverter device.
Figs. 21 (A) to 21 (C) are analysis diagrams in which a received frequency spectrum of an RFID reader/writer is analyzed while an antenna unit of the RFID reader/writer faces a fluorescent lamp that is used as a low-frequency device.
Figs. 22(A) and 22(B) are views corresponding to Figs. 21 (A) to 21 (C) when a liquid crystal screen of a PC is used as the low-frequency device.

### EMBODIMENTS FOR CARRYING OUT THE INVENTION

### (1) First Embodiment

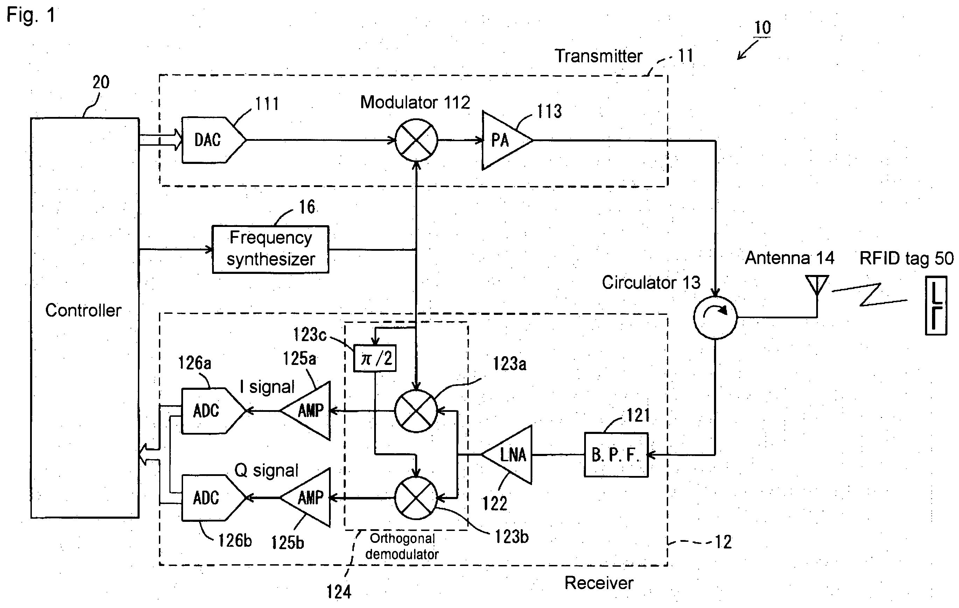

Hereinafter, embodiments of the invention will be described below with reference to the drawings. The case that a receiver performs single sideband (SSB) reception will be described. Fig. 1 is a block diagram illustrating a reader/writer of an RFID system according to a first embodiment. Referring to Fig. 1, a reader/writer 10 includes a transmitter 11, a receiver 12, a circulator 13 that guides a transmitted signal from the transmitter 11 to an antenna 14 and guides a received signal received from a tag 50 by the antenna 14 to the receiver 12, a frequency synthesizer 16 that supplies a carrier wave to the transmitter 11 and the receiver 12, and a controller 20 that controls the transmitter 11 and the receiver 12. The reader/writer 10 transmits and receives the signals to and from the tag 50 through the antenna 14.

The transmitter 11 includes a DA converter 111 that converts a digital signal from the controller 20 into an analog signal, a modulator 112 that is connected to the DA converter 111 and receives a transmitted baseband signal to modulate the carrier wave from the frequency synthesizer 16, and a power amplifier 113. An output of the power amplifier 113 is input to the circulator 13.

The receiver 12 includes a bandpass filter (BPF) 121 that limits a band of the received signal from the circulator 13, a low-noise amplifier 122 that is connected to the bandpass filter 121, and an orthogonal demodulator 124 that receives an output signal from the low-noise amplifier 122 and the carrier wave from the frequency synthesizer 16 and outputs signals in which phases are shifted from each other by 90 degrees. The orthogonal demodulator 124 includes multipliers 123a and 123b and a π/2 phase shifter 123c that shifts the phases of the signals in order to demodulate the signals orthogonal to each other. The signals demodulated by the orthogonal demodulator 124 are amplified as an I signal and a Q signal by amplifiers 125a and 125b, respectively. The I signal and the Q signal are converted into digital signals by AD converters 126a and 126b, respectively. Then the I signal and the Q signal are input to the controller 20 while integrated. The orthogonal demodulator 124, the amplifiers 125a and 125b, the AD converters 126a and 126b, and a demodulated signal processor 25 constitute the demodulation means.

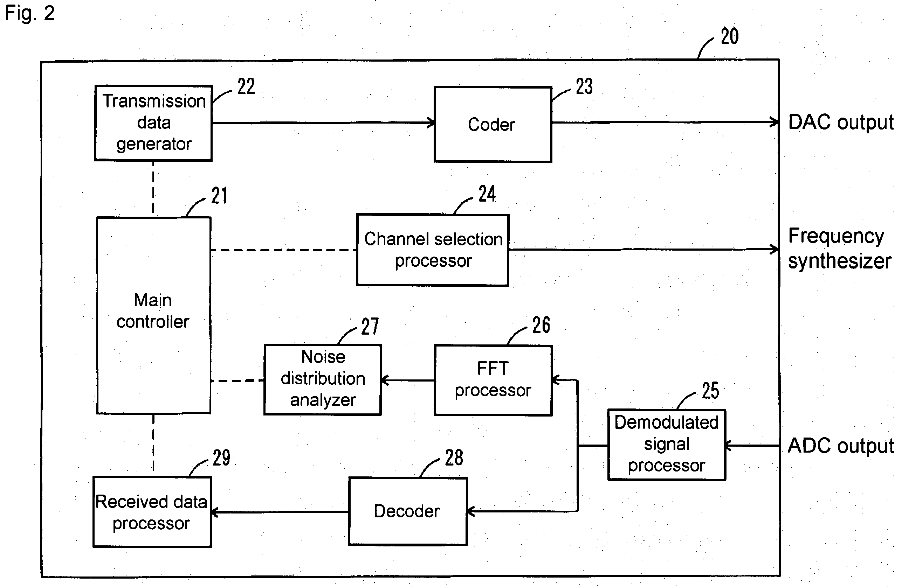

Fig. 2 is a block diagram illustrating the detailed controller 20 of Fig. 1. Referring to Fig. 2, the controller 20 includes a main controller 21 that control the whole controller 20, a transmission data generator 22 that is connected to the main controller 21 to generate transmission data, and a coder 23 that codes the data generated by the transmission data generator 22. An output of the coder 23 is output to the DA converter 111. A channel selection processor 24 is connected to the main controller 21 in order to select a channel, and an output of the channel selection processor 24 is output to the frequency synthesizer 16. The main controller 21 also controls operations of the transmitter 11 and the receiver 12.

The output signals from the AD converters 126a and 126b of Fig. 1 are demodulated by a demodulated signal processor 25. The signals demodulated by the demodulated signal processor 25 are partially transmitted to an FFT processor 26 in order to perform a Fourier transformation, and the signals are also transmitted to a noise distribution analyzer 27 in order to analyze a noise distribution and then transmitted to the main controller 21. The signals demodulated by the demodulated signal processor 25 are also input to a decoder 28 that decodes the signals, and input to the main controller 21 through a reception process data processor 29. The FFT processor 26 and the noise distribution analyzer 27 constitute the detector that detects the noise and the frequency analysis means.

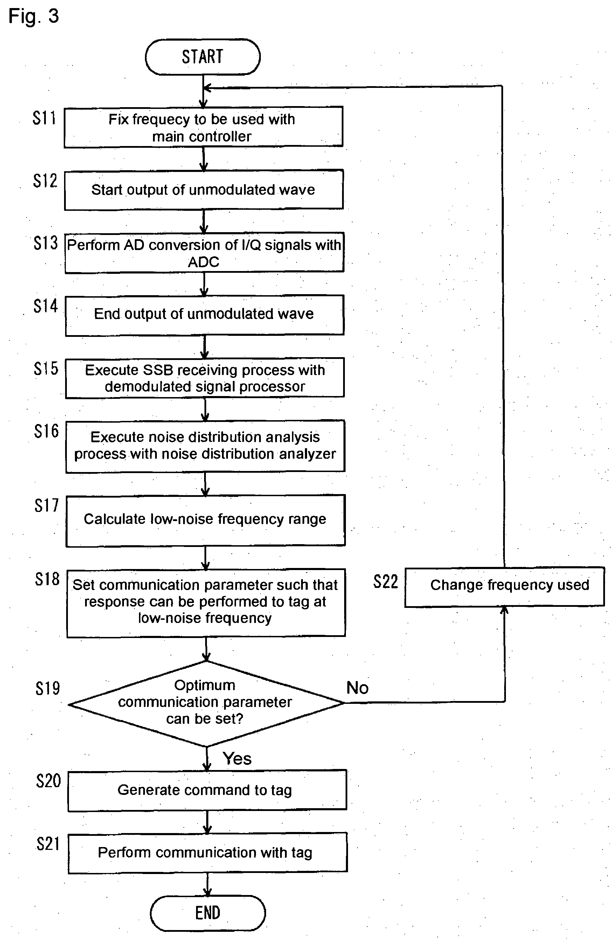

An operation of the reader/writer 10, specifically an operation of the controller 20 will be described below. The operation of the controller 20 is basically controlled by the main controller 21. Fig. 3 is a flowchart illustrating the operation of the controller 20. Referring to Fig. 3, first, a frequency to be used (a frequency at which the reader/writer 10 transmits the signal to the tag) is determined (Step S11, hereinafter "Step" is omitted). Prior to communication with the tag, the radio wave in a frequency band including the frequency used is received for a certain period of time while the carrier wave is output at the frequency used (S12). Specifically, the transmitter 11 transmits the carrier wave from the frequency synthesizer 16 through the antenna 14 while the carrier wave is not modulated by the modulator 112. The receiver 12 receives the radio wave received in that state through the antenna 14. In the receiver, the AD converters 126a and 126b convert the I signal and the Q signal into the digital signals through the bandpass filter 121, the low-noise amplifier 122, the orthogonal demodulator 124, the amplifiers 125a and 125b (S13). Then, the output of the carrier wave is ended (S14).

The demodulated signal processor 25 of the controller 20 executes the SSB receiving process (S15). The FFT processor 26 performs frequency conversion of the received SSB signal, and the noise distribution analyzer 27 analyzes which frequency range is the low noise (S16).

The low-noise frequency range is calculated based on the analysis result of the noise distribution analyzer 27 (S17). An optimum communication parameter is set such that the communication with the tag can be performed at the low-noise frequency (S18). Whether the optimum communication parameter can be set is determined (S19). When the optimum communication parameter can be set (Yes in S19), a command to the tag is generated (S20), and the communication with the tag is performed (S21).

When the optimum communication parameter cannot be set (NO in S19), the frequency used is changed by switching a channel or the like (S22), and the flow returns to S 11 to repeat the processes from S12.

Examples of the optimum communication parameters include the presence or absence of the subcarrier, the frequency of the subcarrier and the communication rate. The optimum communication parameter is used such that the signal sent back from the tag falls within a low-noise band. The specific contents are described later.

The optimum communication parameter fixed by the main controller 21 is transmitted to the transmission data generator 22, and the optimum communication parameter sent back from the tag is generated as the command to the tag. Then, the communication with the tag is performed.

The main controller 21 acts as the control means, the frequency calculation means, the communication parameter setting means, and the communication condition setting means.

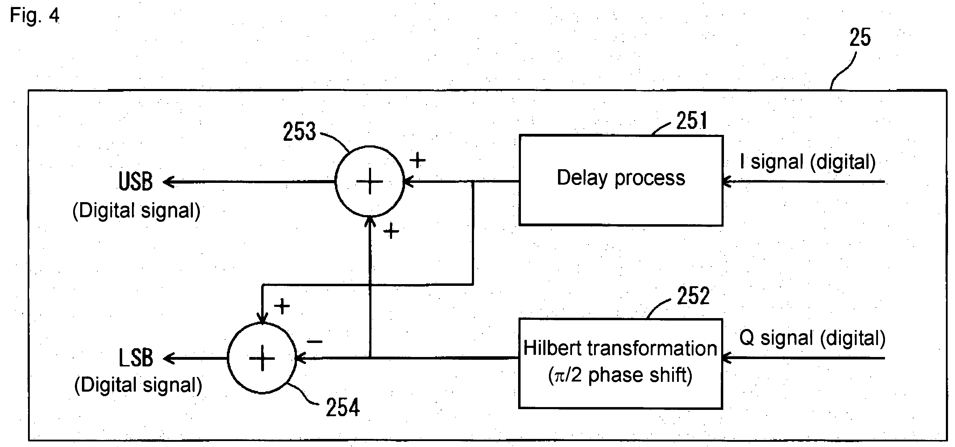

Here, the SSB receiving process executed by the demodulated signal processor 25 in S15 of Fig. 3 will be described. Fig. 4 is a block diagram illustrating a configuration of the demodulated signal processor 25. Referring to Fig. 4, the demodulated signal processor 25 includes a delay processor 251 that executes a delay process to the I signal demodulated by the orthogonal demodulator 124, a Hilbert transformation unit 252 that executes a Hilbert transformation process to the Q signal demodulated by the orthogonal demodulator 124, an adder 253 that adds the Q signal to which the Hilbert transformation process is executed by the Hilbert transformation unit 252 to the I signal to which the delay process is executed by the delay processor 251, and a subtractor 254 that subtracts the Q signal to which the Hilbert transformation process is executed by the Hilbert transformation unit 252 from the I signal to which the delay process is executed by the delay processor 251. The output from the adder 253 is output as a USB signal (digital signal), and the output from the subtractor 254 is output as an LSB signal (digital signal). The delay processor 251 is provided to execute the delay process of the same time necessary for the Hilbert transformation process of the Q signal.

In the SSB receiving process, the USB component and the LSB component are independently processed. A sequence of the processes is arbitrary.

A parameter of the communication with the tag is set using the obtained USB-side signal and LSB-side signal.

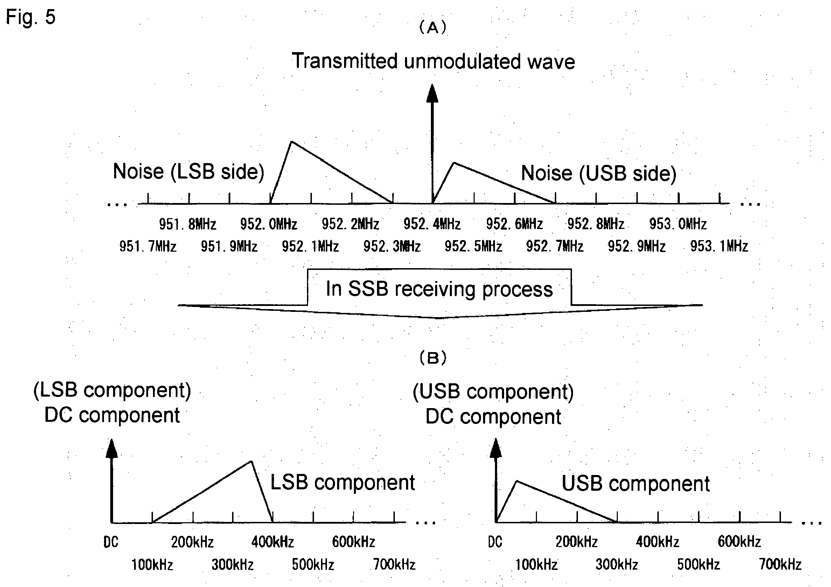

A content of the SSB receiving process will be described. Figs. 5(A) and 5(B) are views illustrating the content of the SSB receiving process. Fig. 5(A) is a view illustrating a noise frequency distribution based on the transmitted carrier wave, and Fig. 5(B) is a view illustrating a state in which the SSB receiving process is executed to the transmitted carrier wave to extract the LSB component and the USB component. It is assumed that the transmitted carrier wave has the frequency of 952.4 MHz. For the SSB reception, as described above, the transmitted carrier wave can be received while the noise (USB side) having the frequency component higher than transmitted carrier wave and the noise (LSB side) having the frequency component lower than transmitted carrier wave are separated. Therefore, the correct frequency distribution of the noise is obtained when the frequency of the transmitted carrier wave is known. In this example, the noise distribution in a periphery of the frequency used can correctly be recognized by measuring the USB component and the LSB component.

Referring to Fig. 5(B), because the transmitted carrier wave has the frequency of 952.4 MHz, the noise exists at the frequency of 952.4 MHz to 952.7 MHz when the USB component has the noise at the frequency of DC to 300 kHz, and the noise exists at the frequency of 952.0 MHz to 952.3 MHz when the LSB component has the noise at the frequency of 100 kHz to 400 kHz. Therefore, it is found that the noise is low in the frequency band including the range of 0 to 952.0 MHz, the range of 952.3 MHz to 952.4 MHz, and the range of 952.7 MHz or more. Accordingly, the communication with the tag can be performed in the low-noise environment by selecting these ranges.

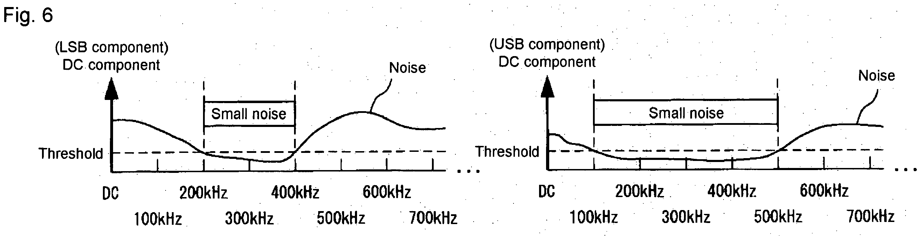

The noise distribution analysis process and the process of calculating the frequency range having the low noise component in S16 and S17 of Fig. 3 will be described below. Fig. 6 is a view illustrating the case that the noise distribution analysis process is executed while a predetermined threshold is fixed. As illustrated in Fig. 6, it is assumed that a threshold is previously fixed while the noise exists. As illustrated in S17, the main controller 21 determines that the frequency range lower than the threshold is the low-noise frequency range.

Referring to Fig. 6, the USB component has the low noise in the range of 100 kHz to 500 kHz, and the LSB component has the low noise in the range of 200 kHz to 400 kHz. Assuming that fc is the frequency of the transmitted carrier wave, it is determined that the noise is low in the two frequency band including the range of (fc - 400 kHz) to (fc - 200 kHz) and the range of (fc + 100 kHz) to (fc + 500 kHz).

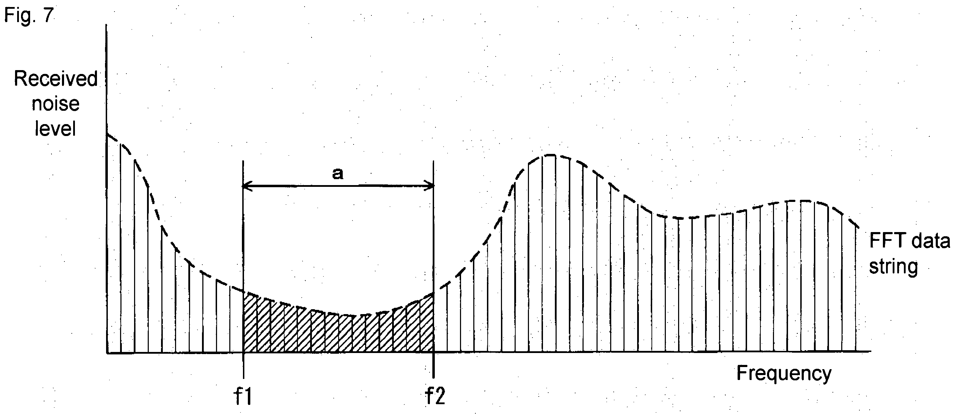

The case that the noise distribution analysis process is determined by integration will be described. Fig. 7 is a view illustrating such a case. As illustrated in Fig. 7, the integration is calculated using an FFT data string, a zone in which the widest frequency range is ensured within a range a where an integral value of the FFT data string does not exceed the threshold is determined as the low-noise frequency range.

The optimum communication parameter setting method in the response from the tag in S18 of Fig. 3 will be described below. The parameter of the communication from the tag to the reader/writer can be specified by the command transmitted from the reader/writer to the tag. For example, in ISO/IEC18000-6 Type C that is a standard of the UHF-band RFID system, a link frequency BLF and the number of subcarrier cycles per symbol M of the subcarrier can arbitrarily be set as the parameter. Table 1 and Table 2 illustrate values of the link frequency BLF and the number of subcarrier cycles per symbol M of the subcarrier in ISO/IEC18000-6 Type C.

**[Table 1]**

| **DR: Divide Ratio** | **TRcal^{a} (µs +/- 1%)** | **BLF: Link Frequency (kHz)** | **Frequency tolerance FT (-25 °C to 40 °**C) | **Frequency Tolerance FT (-40** °C **to 65 °C)** | **Frequency vartation during backscatter** |
|---|---|---|---|---|---|
| | 33.3 | 640 | +/- 15% | +/- 15% | +/- 2.5% |
| | 33.3 < TRcal < 66.7 | 320 < BLF < 640 | +/- 22% | +/- 22% | +/- 2.5% |
| | 65.7 | 320 | +1- 10% | +/- 15% | +/- 2.5% |
| 64/3 | 66.7 < TRcal < 83.3 | 256 < BLF < 320 | +/- 12% | +/- 15% | +/- 2.5% |
| | 83.3 | 256 | +/- 10% | +/- 10% | +/- 2.5% |
| | 83.3 < TRcal ≤ 133.3 | 160 ≤ BLF < 256 | +/- 10% | +/- 12% | +/- 2.5% |
| | 133.3 < TRcal ≤ 200 | 107 ≤ BLF < 160 | +/- 7% | +/- 7% | +/- 2.5% |
| | 200 < TRcal ≤ 225 | 95 ≤ BLF < 107 | +/- 5% | +/- 5% | +/- 2.5% |
| | 17.2 ≤ TRcal < 25 | 320 < BLF ≤ 465 | +/- 19% | +/- 19% | +/- 2.5% |
| | 25 | 320 | +/- 10% | +/- 15% | +/- 2.5% |
| | 26 < TRcal < 31.25 | 256 < BLF < 320 | +/- 12% | +/- 15% | +/- 2.5% |
| 8 | 31.25 | 256 | +/- 10% | +/- 10% | +/- 2.5% |
| | 31.25 < TRcal < 50 | 160 < BLF < 258 | +/- 10% | +/- 10% | +/- 2,5% |
| | 50 | 160 | +/- 7% | +/- 7% | +/- 2.5% |
| | 50 < TRcal ≤ 75 | 107 ≤ BLF < 160 | +/- 7% | +/- 7% | +/- 2.5% |
| | 75 < TRcal ≤ 20C | 40 ≤ BLF < 107 | +/- 4% | +/- 4% | +/- 2.5% |

**[Table 2]**

| M (The number of subcarriers) | Modulation type | Transmission rate (kb/s) |
|---|---|---|
| 1 | FM0 (Baseband) | BLF |
| 2 | Mirror subcarrier | BLF/2 |
| 4 | Mirror subcarrier | BLF/4 |
| 8 | Mirror subcarrier | BLF/8 |

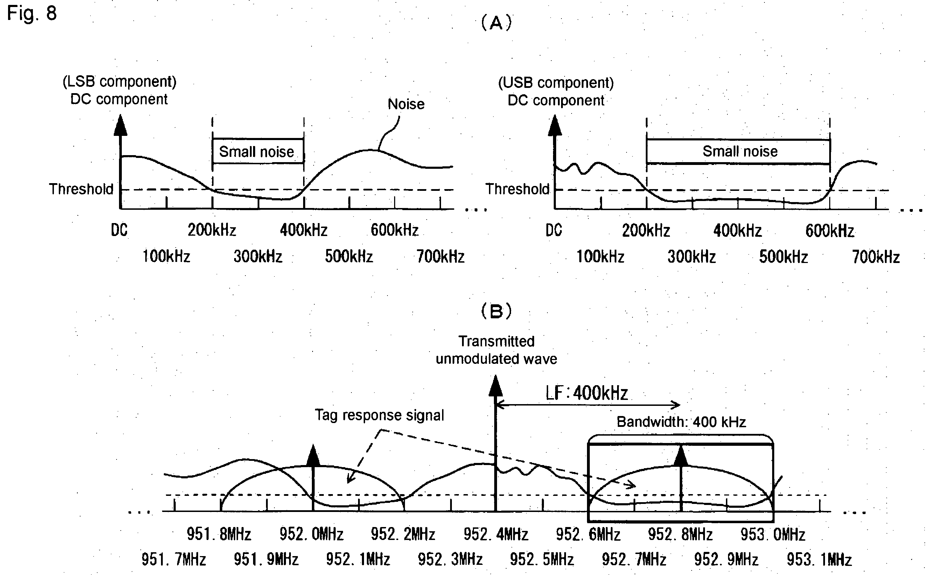

Figs. 8(A) and 8(B) illustrate a low-noise range of the USB component and the LSB component when a certain threshold is fixed (Fig. 8(A)) and the communication parameter setting method (Fig. 8(B)), in the case that the following noise distribution analysis result is obtained for the transmitted carrier wave of 952.4 MHz in the RFID system pursuant to ISO/IEC18000-6 Type C.

As can be seen from Fig. 8(A), in the frequency range of 200 kHz to 600 kHz of the USB component, the noise is low and the wide range can be ensured. Therefore, in the vicinity of the center frequency of 400 kHz, the communication parameter is selected from Tables 1 and 2 so that a band width covers 400 kHz on both ends. As a result, BLF = 400 kHz and M = 4 are set. In the setting, the transmission rate becomes BLF/4 = 100 kbps. The main controller 21 sets M in view of the fact that the bandwidth becomes four times the transmission rate. Alternatively, the bandwidth may be set to arbitrary times the transmission rate as long as the good communication quality can be secured.

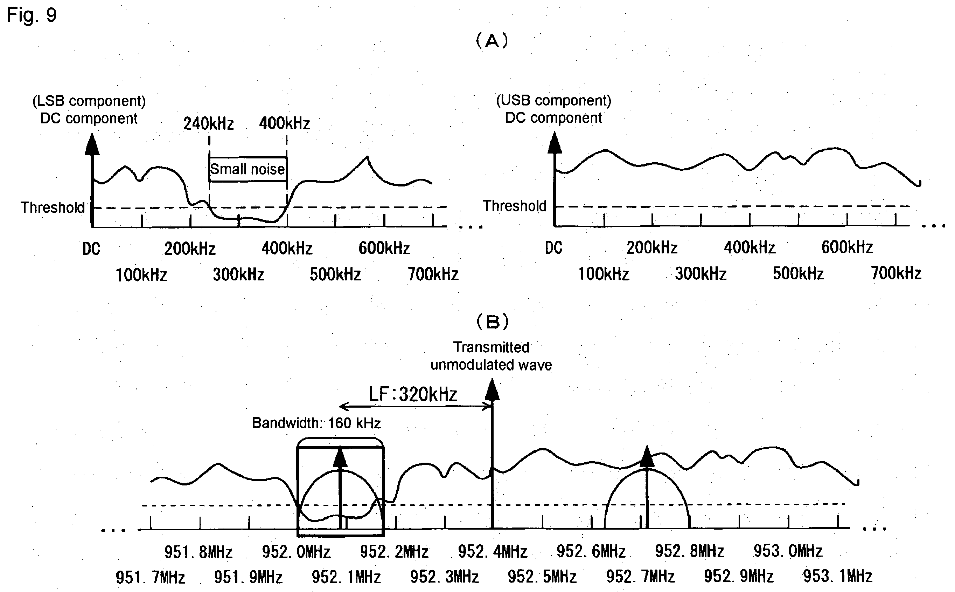

Another specific method for setting the communication parameter will be described below. Figs. 9(A) and 9(B) are views corresponding to Figs. 8(A) and 8(B) in this case. Figs. 9(A) and 9(B) illustrate the noise distribution analysis result for the transmitted carrier wave of 952.4 MHz in the RFID system pursuant to ISO/IEC18000-6 Type C. In this example, the noise is low in the frequency range of 240 kHz to 400 kHz of the LSB component. The bandwidth is 160 kHz. Similarly, BLF = 320 kHz and M = 8 are set as the communication parameter. In the setting, the transmission rate becomes 40 kbps (bandwidth is about 160 kHz).

In Fig. 3, when the optimum communication parameter cannot be set in S19 even if the frequency used is changed several times in S22, an error may be displayed on a display (not illustrated) or the threshold may be changed.

### (2) Second Embodiment

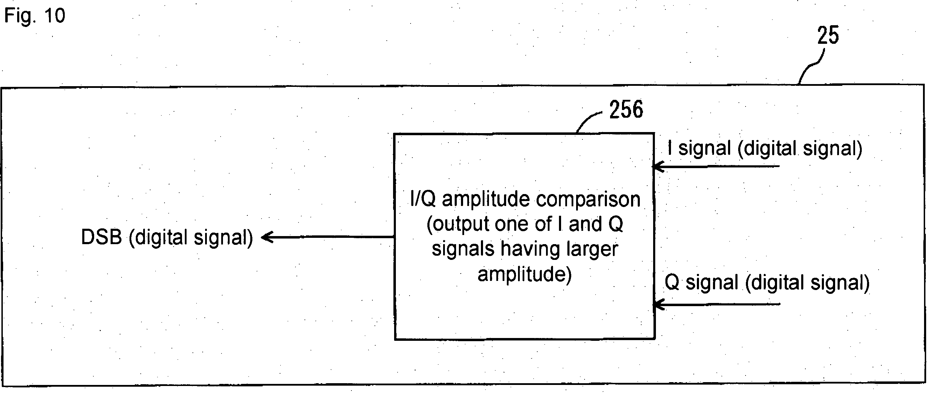

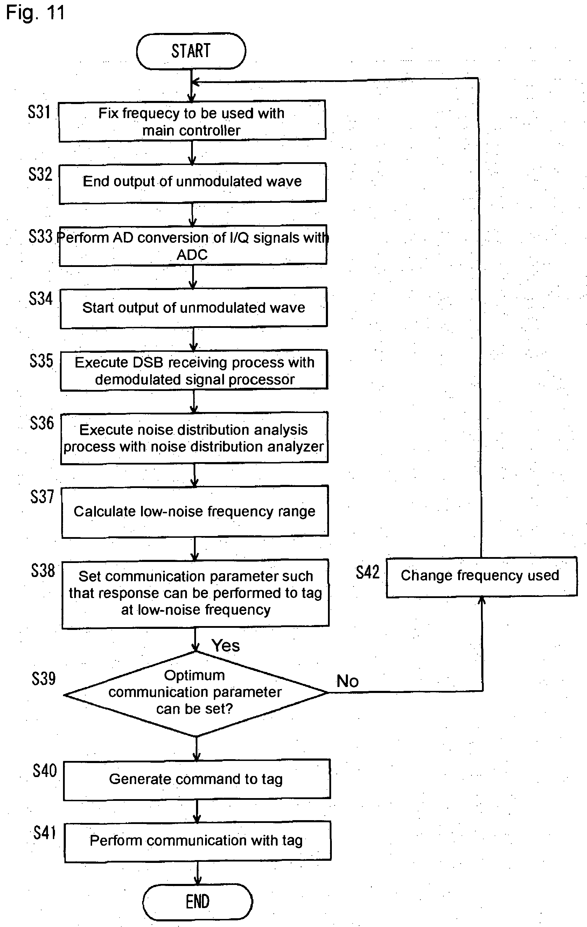

A second embodiment of the invention will be described below. In the first embodiment, the setting is performed using the SSB. However, the invention can also be applied to the double sideband (DSB). In the second embodiment, the entire configuration of the reader/writer and the configuration of the controller of the reader/writer are identical to the block diagrams of Figs. 1 and 2. The second embodiment differs from the first embodiment of Fig. 4 in the configuration of the demodulated signal processor 25. Fig. 10 illustrates the configuration of the demodulated signal processor 25. Fig. 11 is a flowchart illustrating an operation of the controller 20 of the second embodiment.

Referring to Fig. 10, the demodulated signal processor 25 of the second embodiment includes an IQ amplitude comparator 256. The I signal and the Q signal demodulated by the orthogonal demodulator 124 are input to the IQ amplitude comparator 256, the IQ amplitude comparator 256 compares amplitudes of the I signal and the Q signal, and outputs the signal having the larger amplitude as the DSB (digital signal).

The operation of the controller 20 of the second embodiment will be described below. The operation of the controller 20 of the second embodiment is basically identical to that of the first embodiment, and only a different portion is described.

Referring to Fig. 11, S31 to S34 are identical to S11 to S14 of the first embodiment.

The demodulated signal processor 25 of the controller 20 executes the DSB receiving process (S35). The noise distribution analyzer 27 analyzes the noise distribution of the received DSB signal, and the low-noise frequency range is calculated based on the analysis result (S36 and S37). The main controller 21 sets the communication parameter such that the communication with the tag can be performed at the low-noise frequency (S38). Whether the optimum communication parameter can be set is determined (S39). Similarly to the first embodiment, when the optimum communication parameter can be set (YES in S39), the command to the tag 50 is generated, and the communication with the tag 50 is performed (S40 and S41). When the optimum communication parameter cannot be set, the main controller 21 changes the frequency used (S42), and the flow returns to S31.

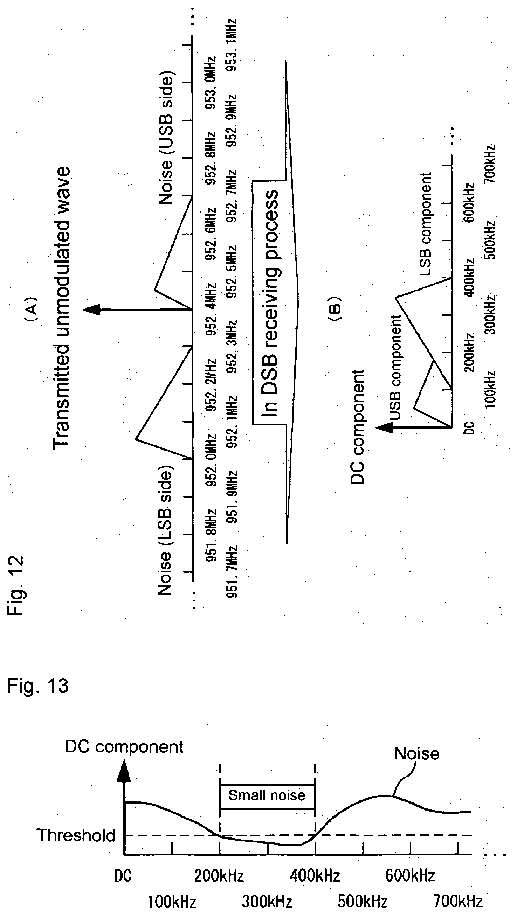

The noise DSB receiving process in S35 of Fig. 11 will be described. Figs. 12(A) and 12(B) are views illustrating the content of the DSB receiving process. Fig. 12(A) is a view illustrating a noise frequency distribution based on the transmitted carrier wave, and Fig. 12(B) is a view illustrating a state in which the DSB receiving process is executed to this signal. It is assumed that the transmitted carrier wave has the frequency of 952.4 MHz. In the DSB reception, the transmitted carrier wave cannot be received while the noise (USB side) having the frequency component higher than transmitted carrier wave and the noise (LSB side) having the frequency component lower than transmitted carrier wave are separated. In the DSB reception, the USB component and the LSB component are combined in the demodulated signal.

In this example, it is found that the noise is low as the demodulated signal in the frequency band of 400 kHz or more.

In the example of the transmitted carrier wave of 952.4 MHz, the noise is low in the frequency band including the range up to 952.0 MHz and the range of 952.8 MHz or more.

The noise distribution analysis process and the process of calculating the frequency range having the low noise component in S36 and S37 of Fig. 11 will be described below. Fig. 13 is a view illustrating the case that the noise distribution analysis process is executed while a predetermined threshold is fixed. As illustrated in Fig. 13, it is assumed that a threshold is previously fixed while the noise exists. The main controller 21 determines that the frequency range lower than the threshold is the low-noise frequency range. As can be seen from Fig. 13, the noise is low as the DSB demodulated signal in the frequency range of 200 kHz to 400 kHz.

Here, assuming that fc is the frequency of the transmitted carrier wave, it is determined that the noise is low in the two frequency band including the range of (fc-400 kHz) to (fc - 200 kHz) and the range of (fc + 200 kHz) to (fc + 400 kHz).

Similarly to the first embodiment, the noise distribution analysis process may be determined by the integration. In this case, because the process is identical to that of the first embodiment, the description thereof is omitted.

The optimum communication parameter setting method in the response from the tag in S38 of Fig. 11 will be described below. In this case as well, as described above in Tables 1 and 2, the link frequency BLF and the number of subcarrier cycles per symbol M of the subcarrier in ISO/IEC18000-6 Type C that is a standard of the UHF-band RFID system are also arbitrarily set as the parameter.

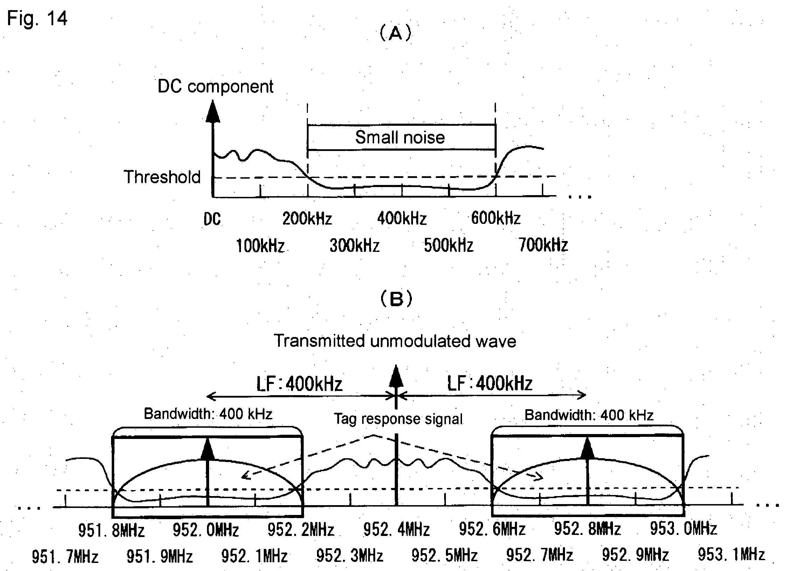

Fig. 14(A) illustrates the noise frequency distribution and the threshold, and Fig. 14(B) illustrates the communication parameter setting method. In the RFID system pursuant to ISO/IEC18000-6 Type C, in the case that the noise distribution analysis result of Fig. 14(A) is obtained for the transmitted carrier wave of 952.4 MHz, the noise is low in the frequency range of 200 kHz to 600 kHz of the DSB demodulated signal. That is, the center frequency is 400 kHz, and the width is 400 kHz. Therefore, referring to Tables 1 and 2, BLF = 400 kHz and M = 4 are set as the communication parameter. In the setting, the transmission rate becomes 100 kbps, and the band of about 400 kHz can be ensured.

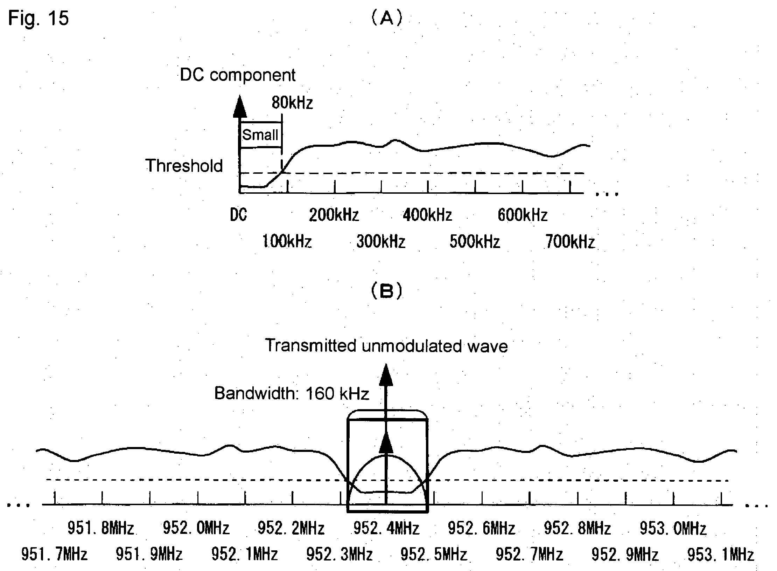

In the second embodiment, another specific method for setting the communication parameter will be described below. Figs. 15(A) and 15(B) are views illustrating an example of this case, and illustrate the same content as that of Fig. 14. In the RFID system pursuant to ISO/IEC18000-6 Type C, in the case that the noise distribution analysis result of Fig. 15(A) is obtained for the transmitted carrier wave of 952.4 MHz, it is found that the noise is low in the frequency range of DC to 80 kHz of the DSB demodulated signal. In this case, BLF = 40 kHz and M = 1 (absence of subcarrier) are set as the communication parameter. In the setting, the transmission rate becomes 40 kbps (bandwidth is about 160 kHz).

In the second embodiment as well, when the optimum communication parameter cannot be set in S39 even if the frequency used is changed several times in S42 of Fig. 11, the threshold may be changed as in the first embodiment.

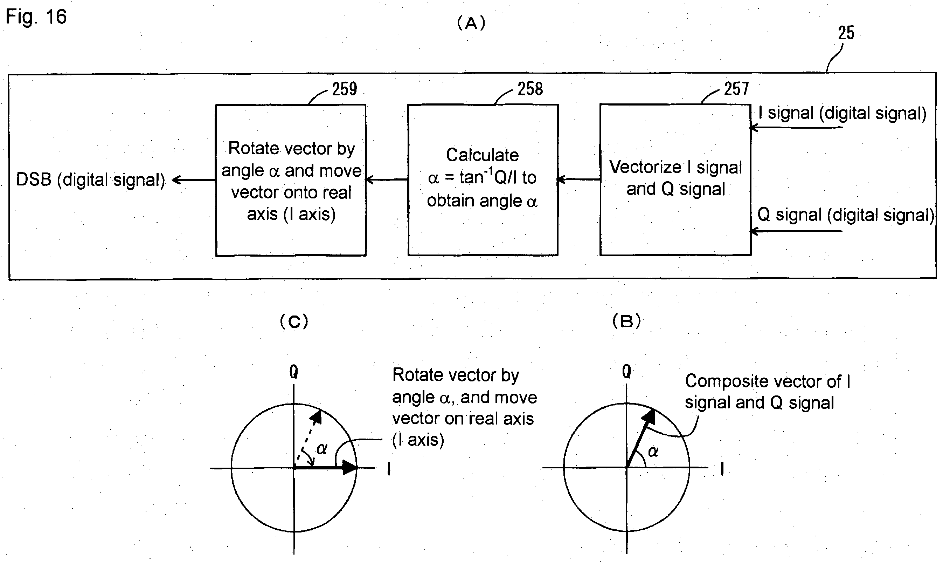

In the second embodiment, in the demodulated signal processor 25, the IQ amplitude comparator compares the amplitudes of the I signal and the Q signal to obtain one output signal. The present invention is not limited there to, and another method may be adopted. Fig. 16(A) is a block diagram corresponding to Fig. 10 in this case, and Fig. 16(B) is a view illustrating a composite vector including the I signal and the Q signal, and Fig. 16(C) is a view illustrating a state in which the composite vector is rotated by an angle α and moved onto an I signal axis (real number axis).

Referring to Fig. 16(A), in the second embodiment, the demodulated signal processor 25 includes a vectorization unit 257 that vectorizes the I signal and the Q signal by inputting the I signal and the Q signal demodulated by the orthogonal demodulator 124, an α-calculator 258 that calculates a predetermined angle α from the vectorized signal, and a real number axis output unit 259 that outputs a real number axis component after rotating the vectorized signal on the real number axis based on the calculated α.

The vectorization unit 257 produces complex numbers of the I signal and the Q signal, and converts the complex numbers into a composite vector in which the I signal is expressed by a real number axis while the Q signal is expressed by an imaginary number axis (Fig. 16(B)). The α-calculator 258 calculates an angle α = tan-1 (Q/I) of the composite vector illustrated in Fig. 16(B). As illustrated in Fig. 16(C), the real number axis output unit 259 rotates the vector by the calculated α to output the real number axis component. In this manner, the calculated real number axis component is output as the DSB signal.

### (3) Third Embodiment

A third embodiment of the invention will be described below. In the second embodiment, the reader/writer of Figs. 1 and 2 including the receiver and the controller, which can also process the SSB signal, executes the DSB reception. On the other hand, in the third embodiment, optimally, the double sideband (DSB) signal is processed by a simple configuration.

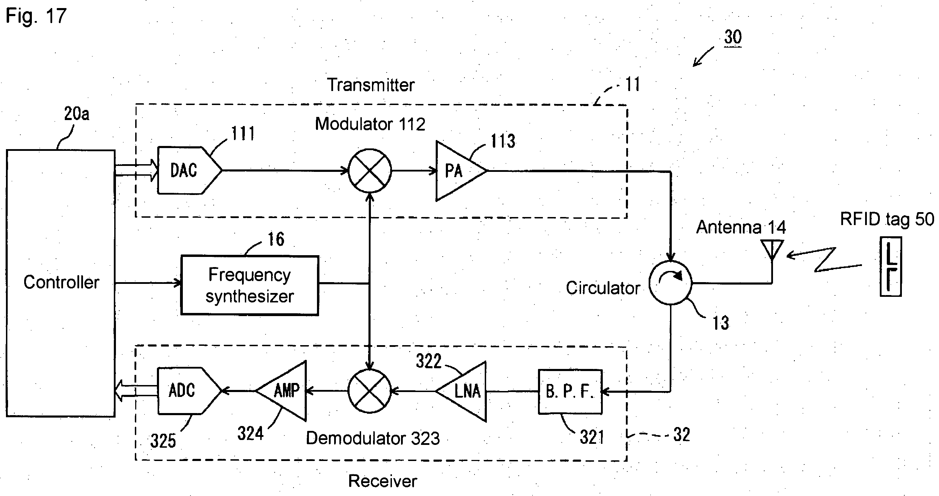

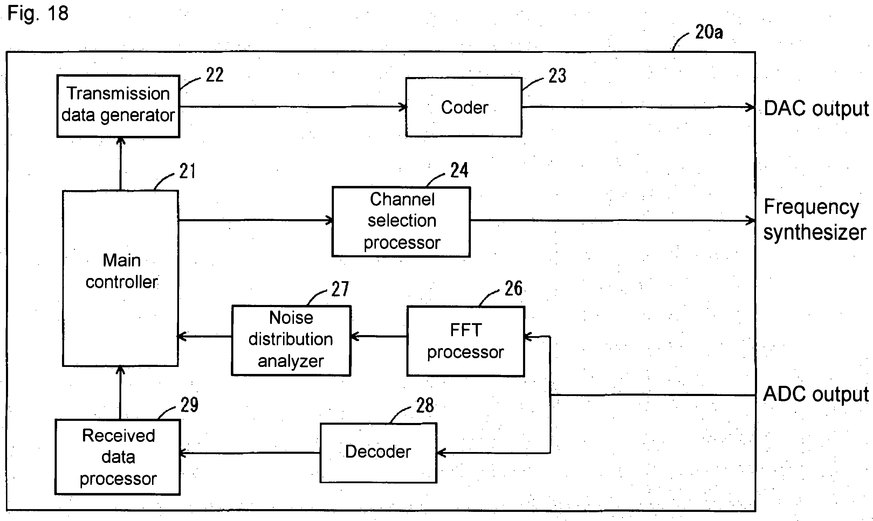

Fig. 17 and Fig. 18 are block diagrams illustrating configurations of a reader/writer 30 and a controller 20a of the third embodiment, and Figs. 17 and 18 correspond to Figs. 1 and 2 of the first embodiment. As illustrated in Fig. 17 and Fig. 18, in the third embodiment, because a receiver 32 and the controller 20a have the configurations different from those of the second embodiment, only the different portions are described, and the descriptions of other portions are omitted.

Referring to Fig. 17, in the third embodiment, the receiver 32 includes a bandpass filter 321 that limits the band of the received signal from the circulator 13, a low-noise amplifier 322 that is connected to the bandpass filter 321, a demodulator 323 that demodulates the output signal from the low-noise amplifier 322 based on the carrier wave from the frequency synthesizer 16, an amplifier 324 that amplifies the demodulated received signal, and an AD converter 325 that converts the signal amplified by the amplifier 324 into the digital signal. The converted digital received signal is input to the controller 20a.

In the third embodiment, the demodulator 323, the amplifier 324, and the AD converter 325 constitute the demodulation means.

Referring to Fig. 18, the controller 20a differs from the controller 20 of Fig. 2 only in that the demodulated signal processor is not provided, and the other portions are same as the second embodiment.

The operations of the reader/writer 30 and the controller 20a of the third embodiment will be described below. The third embodiment is basically identical to the second embodiment except that the third embodiment is specialized in the use of the DSB. Accordingly, the different portion is described, and the description of the same portion as the second embodiment is omitted. In the third embodiment, although the flowchart illustrating the operation of the reader/writer 30 is basically identical to that of Fig. 11, the content of S35 is different because the demodulated signal processor is not provided as described above. That is, in S35 of Fig. 11, the controller 20 executes the DSB receiving process. The processes before S35 (S31 to S35) and the processes after S35 (S36 to S42) are identical to those of the second embodiment.

In the above embodiments, the main controller sets the communication parameter according to the analysis result of the noise distribution analyzer. Alternatively, for example, the analysis result of the noise distribution analyzer is transmitted to an external device, the external device properly sets the communication parameter and transmits the communication parameter to the reader/writer, and the main controller may set the communication parameter.

In the above embodiments, ISO/IEC18000-6 Type C that is the standard of the UHF-band RFID system is used as the optimum communication parameter setting method. The present invention is not limited thereto, and an arbitrary standard may be used.

### INDUSTRIAL APPLICABILITY

The reader/writer of the invention is useful because the reader/writer is hardly influenced by the noise of the low-frequency device.

### DESCRIPTION OF SYMBOLS

- 10, 30: reader/writer
- 11: transmitter
- 12: receiver
- 13: circulator
- 14: antenna
- 15: low-pass filter
- 16: frequency synthesizer
- 17: distributor
- 20, 20a: controller
- 21: main controller
- 22: transmission data generator
- 23: coder
- 24: channel selector
- 25: demodulated signal processor
- 26: FFT processor
- 27: noise distribution analyzer
- 28: decoder
- 29: received data processor
- 111: DA converter
- 112: modulator
- 113: power amplifier
- 121: bandpass filter
- 122: low-noise amplifier
- 123a, 123b: multiplier
- 124: orthogonal demodulator
- 125: amplifier
- 126: AD converter

## Claims

1. An RFID reader/writer (10) comprising:
a transmitter (11) that transmits a transmitted signal to an RFID tag (50), the transmitter (11) transmitting an unmodulated carrier wave;
a receiver (12) that receives a received signal from the RFID tag (50) based on the transmitted signal;
a detector (26, 29) that detects a noise of the received signal received by the receiver (12);
control means (20) for controlling the transmitter (11) and the detector (26, 29), **characterized in that** the detector (26, 29) detects the noise included in the received signal, when the transmitter (11) outputs the unmodulated carrier wave transmitted from the transmitter (11) prior to communication with the RFID tag (50),
setting means (21) for setting a condition of communication with the RFID tag (50) based on a detection result of the detector (26, 29), the setting means (21) including noise analysis means for analyzing the noise included in the received signal, and
communication parameter setting means (21) for setting a communication parameter as the communication condition according to an analysis result of the noise analysis means wherein the communication parameter selects a frequency having a low noise.

2. The RFID reader/writer (10) according to claim 1, wherein a frequency of the carrier wave output from the transmitter (11) is a carrier wave frequency of the transmitted signal used in the communication with the RFID tag (50).

3. The RFID reader/writer (10) according to claim 1 or 2, wherein
the receiver (12) includes demodulation means (124, 125a, 125b, 126a, 126b, 25) for demodulating the received signal received from the RFID tag (50),
the demodulation means (124, 125a, 125b, 126a, 126b, 25) demodulates the received signal as a double-sideband signal, and
the detector (26, 29) detects the noise by measuring the demodulated signal demodulated by the demodulation means (124, 125a, 125b, 126a, 126b, 25).

4. The RFID reader/writer (10) according to claim 1 or 2, wherein
the receiver (12) includes demodulation means (124, 125a, 125b, 126a, 126b, 25) for demodulating the received signal received from the RFID tag (50),
the demodulation means (124, 125a, 125b, 126a, 126b, 25) demodulates the received signal as a single-sideband signal, and
the detector (26, 29) detects the noise by measuring the demodulated signal demodulated by the demodulation means (124, 125a, 125b, 126a, 126b, 25).

5. The RFID reader/writer (10) according to claim 4, wherein
the demodulation means (124, 125a, 125b, 126a, 126b, 25) demodulates the noise having a frequency higher than that of the carrier wave output from the transmitter (11) as an upper sideband (USB) signal, and demodulates the noise having a frequency lower than that of the carrier wave output from the transmitter (11) as a lower sideband (LSB) signal, and
the detector (26, 29) measures the demodulated signal demodulated by the demodulation means (124, 125a, 125b, 126a, 126b, 25).

6. The RFID reader/writer (10) according to any of claims 3 to 5, wherein the detector (26, 29) includes frequency analysis means for analyzing the frequency of the noise possessed by the demodulated signal.

7. The RFID reader/writer (10) according to claim 6, further comprising
frequency calculation means (21) for calculating a frequency band having the lowest noise based on an analysis result of the frequency analysis means.

8. The RFID reader/writer (10) according to claim 7, wherein the communication parameter setting means (21) is adapted to set a communication parameter with respect to the RFID tag (50) according to a calculation result of the frequency calculation means (21).

9. The RFID reader/writer (10) according to claim 8, wherein the communication parameter sets whether a subcarrier is used as a signal sent back from the RFID tag (50).

10. The RFID reader/writer (10) according to claim 6, wherein a frequency of a subcarrier of a signal sent back from the RFID tag (50) is set based on an analysis result of the frequency analysis means.

11. The RFID reader/writer (10) according to claim 8, wherein the communication parameter sets a frequency of a subcarrier of a signal sent back from the RFID tag (50).

12. The RFID reader/writer (10) according to claim 8, wherein the communication parameter sets a communication rate of a signal sent back from the RFID tag (50).

13. The RFID reader/writer (10) according to claim 6, wherein the frequency of the noise detected by the detector (26, 29) is output to an external device.

14. A communication method in which an RFID reader/writer (10) perform communication with an RFID tag (50), the RFID reader/writer (10) including a transmitter (11) that transmits a transmitted signal to the RFID tag (50) and a receiver (12) that receives a received signal from the RFID tag (50) based on the transmitted signal, the communication method comprising the steps of:
transmitting an unmodulated carrier wave from the transmitter (11 );
**characterized in that** the communication method comprises the steps of:
detecting a noise, which is included in the received signal when the transmitter (11) outputs the unmodulated carrier wave transmitted from the transmitter (11) prior to the communication with the RFID tag (50); and
performing the communication with the RFID tag (50) at a frequency having a low detected noise.

15. The communication method according to claim 14, wherein the step of performing the communication with the RFID tag (50) at the frequency having the low detected noise includes the step of setting a communication parameter that selects a frequency having a low noise.

## Patentansprüche

1. RFID-Lese-/Schreibgerät (10), welches aufweist:
einen Sender (11), der ein übertragenes Signal an einen RFID-Tag (50) überträgt, wobei der Sender (11) eine unmodulierte Trägerwelle überträgt;
einen Empfänger (12), der ein empfangenes Signal von dem RFID-Tag (50) basierend auf dem übertragenen Signal empfängt;
einen Detektor (26, 29), der ein Rauschen des empfangenen Signals, das durch den Empfänger (12) empfangen wurde, detektiert;
Steuermittel (20) zum Steuern des Senders (11) und des Detektors (26, 29),
**dadurch gekennzeichnet, dass** der Detektor (26, 29) das Rauschen, das in dem empfangenen Signal enthalten ist, detektiert, wenn der Sender 11 die unmodulierte Trägerwelle, die von dem Sender (11) vor der Kommunikation mit dem RFID-Tag (50) übertragen wurde, ausgibt,
Einrichtungsmittel (21) zum Einrichten eines Zustands der Kommunikation mit dem RFID-Tag (50) basierend auf einem Detektionsergebnis des Detektors (26, 29), wobei die Einrichtungsmittel (21) Rauschanalysemittel zum Analysieren des Rauschens, das in dem empfangenen Signal enthalten ist, aufweisen, und
Kommunikationsparametereinrichtungsmittel (21) zum Einrichten eines Kommunikationsparameters als den Kommunikationszustand gemäß einem Analyseergebnis des Rauschanalysemittels, wobei der Kommunikationsparameter eine Frequenz auswählt, die ein niedriges Rauschen hat.

2. RFID-Lese-/Schreibgeräte (10) gemäß Anspruch 1, wobei eine Frequenz der Trägerwelle, die von dem Sender (11) ausgegeben wird, eine Trägerwellenfrequenz des übertragenen Signals ist, das in der Kommunikation mit dem RFID-Tag (50) verwendet wird.

3. RFID-Lese/Schreibgerät (10) gemäß Anspruch 1 oder 2, wobei
der Empfänger (12) ein Demodulationsmittel (124, 125a, 125b, 126a, 126b, 25) zum Demodulieren des empfangenen Signals, das von dem RFID-Tag empfangen wird, aufweist,
das Demodulationsmittel (124, 125a, 125b, 126a, 126b, 25) das empfangene Signal als ein Zweiseitenbandsignal demoduliert, und
der Detektor (26, 29) das Rauschen detektiert, indem das demodulierte Signal, das durch das Demodulationsmittel (124, 125a, 125b, 126a, 126b, 25) demoduliert wurde, gemessen wird.

4. RFID-Lese/Schreibgerät (10) gemäß Anspruch 1 oder 2, wobei
der Empfänger (12) ein Demodulationsmittel (124, 125a, 125b, 126a, 126b, 25) zum Demodulieren des empfangenen Signals, das von dem RFID-Tag (50) empfangen wurde, aufweist,
das Demodulationsmittel (124, 125a, 125b, 126a, 126b, 25) das empfangene Signal als ein Einzelseitenband demoduliert, und
der Detektor (26, 29) das Rauschen detektiert, indem das demodulierte Signal, das durch das Demodulationsmittel (124, 125a, 125b, 126a, 126b, 25) demoduliert wurde, gemessen wird.

5. RFID-Lese/Schreibgerät (10) gemäß Anspruch 4, wobei
das Demodulationsmittel (124, 125a, 125b, 126a, 126b, 25) das Rauschen, das eine Frequenz hat, die höher als die der Trägerwelle ist, die von dem Sender (11) ausgegeben wurde, als ein oberes Seitenband-(USB-)Signal demoduliert, und das Rauschen, das eine Frequenz hat, die niedriger als die der Trägerwelle ist, die von dem Sender (11) ausgegeben wurde, als ein unteres Seitenband-(LSB-)Signal demoduliert, und
der Detektor (26, 29) das demodulierte Signal, das durch das Demodulationsmittel (124, 125a, 125b, 126a, 126b, 25) demoduliert wurde, misst.

6. RFID-Lese/Schreibgerät (10) gemäß einem der Ansprüche 3 bis 5, wobei der Detektor (26, 29) ein Frequenzanalysemittel zum Analysieren der Frequenz des Rauschens, das von dem demodulierten Signal besessen wird, aufweist.

7. RFID-Lese/Schreibgerät (10) gemäß Anspruch 6, des Weiteren aufweisend:
ein Frequenzberechnungsmittel (21) zum Berechnen eines Frequenzbandes, das das niedrigste Rauschen hat, basierend auf einem Analyseergebnis des Frequenzanalysemittels.

8. RFID-Lese/Schreibgerät (10) gemäß Anspruch 7, wobei das Kommunikationsparametereinrichtungsmittel (21) eingerichtet ist, einen Kommunikationsparameter in Bezug auf den RFID-Tag (50) gemäß einem Berechnungsergebnis des Frequenzberechnungsmittels (21) einzurichten.

9. RFID-Lese/Schreibgerät (10) gemäß Anspruch 8, wobei der Kommunikationsparameter festsetzt, ob ein Unterträger als ein Signal verwendet wird, das von dem RFID-Tag (50) zurückgesendet wird.

10. RFID-Lese/Schreibgerät (10) gemäß Anspruch 6, wobei eine Frequenz eines Unterträgers eines Signals, das von dem RFID-Tag (50) zurückgesendet wird, basierend auf einem Analyseergebnis des Frequenzanalysemittels eingerichtet wird.

11. RFID-Lese/Schreibgerät (10) gemäß Anspruch 8, wobei der Kommunikationsparameter eine Frequenz eines Unterträgers eines Signals, das von dem RFID-Tag (50) zurückgesendet wird, festsetzt.

12. RFID-Lese/Schreibgerät (10) gemäß Anspruch 8, wobei der Kommunikationsparameter eine Kommunikationsrate eines Signals, das von dem RFID-Tag (50) zurückgesendet wird, festsetzt.

13. RFID-Lese/Schreibgerät (10) gemäß Anspruch 6, wobei die Frequenz des Rauschens, das durch den Detektor (26, 29) detektiert wird, an eine externe Vorrichtung ausgegeben wird.

14. Kommunikationsverfahren, in dem ein RFID-Lese/Schreibgerät (10) eine Kommunikation mit einem RFID-Tag (50) durchführt, wobei das RFID-Lese-/ Schreibgerät (10) einen Sender (11), der ein übertragenes Signal an den RFID-Tag (50) überträgt, und einen Empfänger (12) aufweist, der ein empfangenes Signal von dem RFID-Tag (50) basierend auf dem übertragenen Signal empfängt, wobei das Kommunikationsverfahren die Schritte aufweist:
Übertragen einer unmodulierten Trägerwelle von dem Sender (11);
**dadurch gekennzeichnet, dass** das Kommunikationsverfahren die Schritte aufweist:
Detektieren eines Rauschens, das in dem empfangenen Signal enthalten ist, wenn der Sender (11) die unmodulierte Trägerwelle, die von dem Sender (11) vor der Kommunikation mit dem RFID-Tag (50) übertragen wurde, ausgibt; und
Durchführen der Kommunikation mit dem RFID-Tag (50) bei einer Frequenz, die ein niedriges detektiertes Rauschen hat.

15. Kommunikationsverfahren gemäß Anspruch 14, wobei der Schritt des Durchführens der Kommunikation mit dem RFID-Tag (50) bei der Frequenz, die das niedrige detektierte Rauschen hat, den Schritt des Festsetzens eines Kommunikationsparameters aufweist, der eine Frequenz aufweist, die ein niedriges Rauschen hat.

## Revendications

1. Dispositif de lecture/écriture RFID (10), comprenant :
un émetteur (11) qui émet un signal émis vers une étiquette RFID (50), l'émetteur (11) émettant une onde porteuse non modulée ;
un récepteur (12) qui reçoit un signal reçu à partir de l'étiquette RFID (50) sur la base du signal émis ;
un détecteur (26, 29) qui détecte un bruit du signal reçu reçu par le récepteur (12) ;
un moyen de commande (20) pour commander l'émetteur (11) et le détecteur (26, 29), **caractérisé en ce que** le détecteur (26, 29) détecte le bruit inclus dans le signal reçu, lorsque l'émetteur (11) émet l'onde porteuse non modulée émise par l'émetteur (11) avant la communication avec l'étiquette RFID (50),
un moyen de réglage (21) pour régler une condition de communication avec l'étiquette RFID (50) sur la base d'un résultat de détection du détecteur (26, 29), le moyen de réglage (21) comprenant un moyen d'analyse du bruit pour analyser le bruit inclus dans le signal reçu, et
un moyen de réglage de paramètre de communication (21) pour régler un paramètre de communication en tant que condition de communication en fonction d'un résultat d'analyse du moyen d'analyse du bruit, dans lequel le paramètre de communication sélectionne une fréquence ayant un faible bruit.

2. Dispositif de lecture/écriture RFID (10) selon la revendication 1, dans lequel une fréquence de l'onde porteuse émise par l'émetteur (11) est une fréquence d'onde porteuse du signal émis utilisé dans la communication avec l'étiquette RFID (50).

3. Dispositif de lecture/écriture RFID (10) selon la revendication 1 ou 2, dans lequel
le récepteur (12) comprend un moyen de démodulation (124, 125a, 125b, 126a, 126b, 25) pour démoduler le signal reçu de l'étiquette RFID (50),
le moyen de démodulation (124, 125a, 125b, 126a, 126b, 25) démodule le signal reçu en tant que signal à double bande latérale, et
le détecteur (26, 29) détecte le bruit en mesurant le signal démodulé démodulé par le moyen de démodulation (124, 125a, 125b, 126a, 126b, 25).

4. Dispositif de lecture/écriture RFID (10) selon la revendication 1 ou 2, dans lequel
le récepteur (12) comprend un moyen de démodulation (124, 125a, 125b, 126a, 126b, 25) pour démoduler le signal reçu de l'étiquette RFID (50),
le moyen de démodulation (124, 125a, 125b, 126a, 126b, 25) démodule le signal reçu en tant que signal à bande latérale unique, et
le détecteur (26, 29) détecte le bruit en mesurant le signal démodulé démodulé par le moyen de démodulation (124, 125a, 125b, 126a, 126b, 25).

5. Dispositif de lecture/écriture RFID (10) selon la revendication 4, dans lequel
le moyen de démodulation (124, 125a, 125b, 126a, 126b, 25) démodule le bruit ayant une fréquence supérieure à celle de l'onde porteuse émise par l'émetteur (11) en tant que signal de bande latérale supérieure (USB), et démodule le bruit ayant une fréquence inférieure à celle de l'onde porteuse émise l'émetteur (11) en tant que signal de bande latérale inférieure (LSB), et le détecteur (26, 29) mesure le signal démodulé démodulé par le moyen de démodulation (124, 125a, 125b, 126a, 126b, 25).

6. Dispositif de lecture/écriture RFID (10) selon l'une quelconque des revendications 3 à 5, dans lequel le détecteur (26, 29) comprend un moyen d'analyse de fréquence pour analyser la fréquence du bruit que possède le signal démodulé.

7. Dispositif de lecture/écriture RFID (10) selon la revendication 6, comprenant en outre :
un moyen de calcul de fréquence (21) pour calculer une bande de fréquences ayant le plus faible bruit sur la base d'un résultat d'analyse du moyen d'analyse de fréquence.

8. Dispositif de lecture/écriture RFID (10) selon la revendication 7, dans lequel le moyen de réglage de paramètre de communication (21) est conçu pour régler un paramètre de communication par rapport à l'étiquette RFID (50) en fonction d'un résultat de calcul du moyen de calcul de fréquence (21).

9. Dispositif de lecture/écriture RFID (10) selon la revendication 8, dans lequel le paramètre de communication définit si une sous-porteuse est utilisée en tant que signal renvoyé par l'étiquette RFID (50).

10. Dispositif de lecture/écriture RFID (10) selon la revendication 6, dans lequel une fréquence d'une sous-porteuse d'un signal renvoyé par l'étiquette RFID (50) est réglée sur la base d'un résultat d'analyse du moyen d'analyse de fréquence.

11. Dispositif de lecture/écriture RFID (10) selon la revendication 8, dans lequel le paramètre de communication définit une fréquence d'une sous-porteuse d'un signal renvoyé par l'étiquette RFID (50).

12. Dispositif de lecture/écriture RFID (10) selon la revendication 8, dans lequel le paramètre de communication définit une vitesse de communication d'un signal renvoyé par l'étiquette RFID (50).

13. Dispositif de lecture/écriture RFID (10) selon la revendication 6, dans lequel la fréquence du bruit détecté par le détecteur (26, 29) est émise vers un dispositif externe.

14. Procédé de communication dans lequel un dispositif de lecture/écriture RFID (10) effectue une communication avec une étiquette RFID (50), le dispositif de lecture/écriture RFID (10) comprenant un émetteur (11) qui émet un signal émis vers l'étiquette RFID (50) et un récepteur (12) qui reçoit un signal reçu à partir de l'étiquette RFID (50) sur la base du signal émis, le procédé de communication comprenant les étapes consistant à :
émettre une onde porteuse non modulée à partir de l'émetteur (11) ;
**caractérisé en ce que** le procédé de communication comprend les étapes consistant à :
détecter un bruit, qui est inclus dans le signal reçu lorsque l'émetteur (11) émet l'onde porteuse non modulée émise par l'émetteur (11) avant la communication avec l'étiquette RFID (50) ; et
effectuer la communication avec l'étiquette RFID (50) à une fréquence ayant un faible bruit détecté.

15. Procédé de communication selon la revendication 14, dans lequel l'étape consistant à effectuer la communication avec l'étiquette RFID (50) à la fréquence présentant le faible bruit détecté comprend l'étape consistant à définir un paramètre de communication qui sélectionne une fréquence ayant un faible bruit.
